# EUROPÄISCHE PATENTANMELDUNG

(11) **EP 2 535 613 A1**
(43) Veröffentlichungstag der Anmeldung: **19.12.2012**
(21) Anmeldenummer: 12171426.5
(22) Anmeldetag: 11.06.2012
(51) Int. Cl.: F16D 65/00, F16D 65/02, F16D 65/092, F16D 69/02

(54) **Bremsenbauteil**

(30) Priorität: 15.06.2011 DE 102011051061
(71) Anmelder: TMD Friction Services GmbH, 51381 Leverkusen (DE)
(72) Erfinder: Hötzel, Dominik, 40629 Düsseldorf (DE); Hogenkamp, Wolfgang, 42349 Wuppertal (DE)
(74) Vertreter: Müller, Eckhard

(57) **Zusammenfassung**

Ein Bremsenbauteil, insbesondere für einen Bremsbacken und/oder für eine Bremse, der zumindest eine viskoelastische Schicht (3) aufweist. Das Bremsenbauteil zeichnet sich dadurch aus, dass zumindest eine Seite der viskoelastischen Schicht form- und/oder stoffschlüssig mit einer Stabilisierungsschicht (4) verbunden ist, die die Seite der viskoelastischen Schicht unvollständig bedeckt.

## Beschreibung

Die Erfindung betrifft ein Bremsenbauteil (1), insbesondere Reibbelag und/oder Bremsbacke, für eine Bremse, das zumindest eine viskoelastische Schicht (3) aufweist.

Zur Beeinflussung des Schwingungsverhaltens, insbesondere von Bremsbacken, beispielsweise für Scheibenbremsen, ist es bekannt, Bremsenbauteile mit einer Dämpfungsschicht aus viskoelastischem Material zu versehen.

Beispielsweise ist aus US 5,407,034 eine geräuschgedämpfte Bremsbacke bekannt, die viskoelastisches Material aufweist. Das viskoelastische Material ist vollflächig zwischen Metallschichten angeordnet.

Aus EP 0 798 481 B1 ist eine Zwischenlage zum Verhindern des Bremsquietschens in einer Scheibenbremse bekannt. Die Zwischenlage umfasst eine Metallplatte mit einer ersten und einer zweiten Oberfläche, eine Gummischicht und eine druckempfindliche Klebeschicht. Auf der ersten Oberfläche der Metallplatte ist die Gummischicht angeordnet, während die druckempfindliche Klebeschicht an der zweiten Oberfläche der Metallplatte vorgesehen ist. Es ist vorgesehen, dass die Gummischicht oder eine optionale Zwischenschicht aus reibungsarmen Material mit einem Bremskolbenelement in Kontakt treten.

Aus DE 88 09 363 U1 ist ein mehrschichtiges Bauelement zur Übertragung einer Reibungskraft, insbesondere für Kupplungen oder Bremsen, mit einer Tragschicht, einer Zwischenschicht aus elastomeren Material und einer Reibschicht aus einem Reibwerkstoff bekannt. Es ist darüber hinaus eine weitere Zwischenschicht zwischen der Trägerschicht und der Reibschicht vorgesehen, die im Wesentlichen aus hydriertem Nitril-Kautschuk oder aus einem Fluor-Elastomer besteht.

Die aus dem Stand der Technik bekannten Bremsenbauteile haben den Nachteil, dass sie zumeist einen sehr aufwändigen, viele Schichten umfassenden Aufbau aufweisen. Insbesondere beanspruchen einige der aus dem Stand der Technik bekannten Bremsenbauteile viel Bauraum, was sich letztlich in nachteiliger Weise in Bezug auf den für den eigentlichen Reibbelag zur Verfügung stehenden Platz auswirkt.

Darüber hinaus erreichen viele der aus dem Stand der Technik bekannten Bremsenbauteile keine ausreichende Dämpfung der im Betrieb auftretenden Schwingungen.

Es ist daher die Aufgabe der vorliegenden Erfindung, ein Bremsenbauteil anzugeben, das einfacher und platzsparender aufgebaut sein kann und das dennoch eine hohe Dämpfungswirkung hinsichtlich der im Betrieb auftretenden Schwingungen entfaltet.

Die Aufgabe wird durch ein Bremsenbauteil der eingangs genannten Art gelöst, das dadurch gekennzeichnet ist, dass zumindest eine Seite der viskoelastischen Schicht form- und/oder stoffschlüssig mit einer Stabilisierungsschicht verbunden ist, die die Seite der viskoelastischen Schicht unvollständig bedeckt.

In erfindungsgemäßer Weise wurde erkannt, dass es für ein gutes Dämpfungsverhalten wichtig ist, die viskoelastische Schicht zumindest auf einer Seite, insbesondere in Bezug auf Kräfte, die parallel zur Oberflächenebene wirken, zu stabilisieren. Hierdurch können Zug- und/oder Druckspannungen, welche an der Unterseite einer aufgebrachten Reibschicht beispielsweise durch Schwingungen auftreten, mit deutlich größerer Effizienz in die viskoelastische Schicht eingeleitet werden. In der viskoelastischen Schicht erfolgt dann eine Umwandlung der Schwingungsbewegungen in Wärme. Durch die Erhöhung der Effizienz bei der Einleitung der Zug- und/oder Druckspannungen in die viskoelastische Schicht, erhöht sich die dämpfende Wirkung insgesamt erheblich.

In erfindungsgemäßer Weise wurde erkannt, dass zur Erzielung des beschriebenen Effektes keine vollflächige Bedeckung der viskoelastischen Schicht mit der Stabilisierungsschicht nötig ist. Vielmehr reicht es in erfindungsgemäßer Weise aus, wenn die Stabilisierungsschicht ca. 2/3 der viskoelastischen Schicht bedeckt, um nahezu denselben Effekt zu erzielen, wie bei vollflächiger Bedeckung.

Darüber hinaus wurde erkannt, dass die Stabilisierungsschicht auch dann eine sehr gute Wirkung entfaltet, wenn sie lediglich und weitgehend ausschließlich hinsichtlich in der Flächenebene auftretender Kräfte zug- und/oder druckfest ausgebildet ist. Insoweit muss die Stabilisierungsschicht nicht biegesteif ausgebildet sein, wie dies beispielsweise die aus dem Stand der Technik bekannten, als Zwischenlage eingefügten Metallplatten sind.

Bei einer besonderen Ausführungsform des erfindungsgemäßen Bremsenbauteils ist die viskoelastische Schicht als einstückiger Körper aus einem viskoelastischen Material ausgebildet. Insbesondere kann vorgesehen sein, dass die viskoelastische Schicht als homogener, einstückiger Körper aus einem viskoelastischen Material ausgebildet ist.

Besonders einfach herstellbar ist eine Ausführung, bei der die viskoelastische Schicht als einstückige, vorzugsweise homogene Platte aus einem viskoelastischen Material ausgebildet ist. Es ist jedoch nicht zwingend erforderlich, dass die viskoelastische Schicht vollkommen eben ist. Vielmehr kann auch vorgesehen sein, dass die viskoelastische Schicht Erhebungen und/oder Vertiefungen aufweist. Solche Erhebungen und/oder Vertiefungen können beispielsweise dazu dienen, einen besseren Formschluss an die Stabilisierungsschicht und/oder an einen Reibbelag und/oder an einen Grundträger und/oder eine Grundträgerplatte herzustellen.

Bei einer einfachen, jedoch hinsichtlich der Dämpfungswirkung und hinsichtlich der Bauraumbeanspruchung besonders vorteilhaften Ausführungsform des erfindungsgemäßen Bremsenbauteils ist vorgesehen, dass die viskoelastische Schicht auf ihrer der Stabilisierungsschicht abgewandten Seite mit einem Grundträger und/oder einer Grundträgerplatte fest verbunden ist. Bei dem Grundträger beziehungsweise der Grundträgerplatte kann es sich vorteilhaft um eine mehrere Millimeter dicke Metall-, insbesondere Stahlplatte, handeln. Von besonderem Vorteil ist es hierbei, wenn die viskoelastische Schicht auch mit dem Grundträger beziehungsweise der Grundträgerplatte in der Weise verbunden ist, dass Scherkräfte, die parallel zur Ebene der viskoelastischen Schicht auftreten, weitgehend unmittelbar übertragen werden. Eine solche Ausführung hat den ganz besonderen Vorteil, dass die viskoelastische Schicht gewissermaßen beidseitig mit einer zug- und/oder druckfesten Schicht versehen ist und demgemäß - obwohl die Stabilisierungsschicht nicht notwendigerweise biegesteif sein muss - im Verbund dennoch eine äußerst effiziente Biegesteifigkeit aufweist. Hieraus resultiert eine Veränderung der Eigenfrequenz und Dämpfung.

Wie bereits erwähnt, treten die genannten positiven Effekte erfindungsgemäß auch dann ein, wenn die Stabilisierungsschicht die viskoelastische Schicht nicht vollständig bedeckt. Es hat sich gezeigt, dass ein Bedeckungsgrad von ca. 2/3 der Fläche der viskoelastischen Schicht in der Regel ausreichend ist, um nahezu den gleichen Effekt wie bei vollständiger Bedeckung zu erreichen. Es kann jedoch auch vorgesehen sein, dass - lediglich mit leichten Abstrichen hinsichtlich der genannten positiven Effekte - die Bedeckung lediglich zwischen 20% und 80%, insbesondere weniger als 50%, beträgt. Bei einer besonderen Ausführungsform beträgt die Bedeckung zwischen 20% und 50%.

Bei einer Ausführungsform, die besonders leicht und besonders platzsparend ausführbar ist, ist die Stabilisierungsschicht in Form einer Folie und/oder in Form eines Gitters und/oder in Form eines Netzes und/oder in Form eines Streifens und/oder in Form eines Streifenmusters ausgeführt.

Wie bereits ausgeführt, kann in vorteilhafter Weise vorgesehen sein, dass die Stabilisierungsschicht in einer Stabilisierungsebene angeordnet ist und dass die Stabilisierungsschicht in Bezug auf die in der Stabilisierungsebene auftretenden Kräfte zug- und/oder druckfest ausgebildet ist.

Bei einer besonders vorteilhaften Ausführungsform weist die Stabilisierungsschicht ein Kevlarnetz und/oder zumindest einen Kevlarstreifen auf. Insbesondere kann vorgesehen sein, dass die Stabilisierungsschicht aus einem Kevlarnetz und/oder aus einem Kevlarstreifen und/oder aus einem Kevlarstreifenmuster gebildet ist.

In vorteilhafter Weise kann auch vorgesehen sein, dass die Stabilisierungsschicht ein Kunststoffgewebe aufweist und/oder aus einem Kunststoffgewebe gebildet ist.

Besonders effizient und dennoch platzsparend ist eine Ausführungsform des erfindungsgemäßen Bremsenbauteils, bei dem die Stabilisierungsschicht eine Metallfolie, insbesondere eine Aluminiumfolie aufweist und/oder aus einer Metallfolie, insbesondere einer Aluminiumfolie gebildet ist.

Wie bereits ausgeführt, kann die Stabilisierungsschicht - insbesondere da sie selbst nicht zwingend biegesteif sein muss - im Verhältnis zur viskoelastischen Schicht beziehungsweise im Verhältnis zu einem Grundträger, insbesondere einer Grundträgerplatte, dünn ausgeführt sein. Demgemäß weist die Stabilisierungsschicht bei einer besonderen Ausführungsform eine dicke im Bereich von 0,05 mm bis 2 mm, insbesondere von 0,1 mm auf. Insbesondere bei einer Ausführung der Stabilisierungsschicht in Form einer Folie -jedoch auch bei anderen Ausführungsformen - kann vorteilhaft vorgesehen sein, dass die Stabilisierungsschicht dünner ist, als ¼ der Dicke des Grundträgers und/oder dünner als die Hälfte der Dicke der viskoelastischen Schicht.

Bei einer Ausführungsform, die eine besonders stabile Verbindung zwischen der viskoelastischen Schicht und der Stabilisierungsschicht bietet, ist vorgesehen, dass die Stabilisierungsschicht zumindest teilweise innerhalb der viskoelastischen Schicht angeordnet ist. Alternativ oder zusätzlich kann vorgesehen sein, dass die Stabilisierungsschicht zumindest teilweise in die Oberfläche der Seite der viskoelastischen Schicht eingelassen ist. Bei einer solchen Ausführungsform ist eine Übertragung von Scherkräften von einer Schicht zur anderen Schicht durch den Formschluss besonders effizient.

Es hat sich gezeigt, dass es zur Erreichung einer guten Dämpfungswirkung erfindungsgemäß ausreichend ist, wenn das Bremsenbauteil ausschließlich eine einzig viskoelastische Schicht aufweist. Dennoch kann natürlich vorgesehen sein, dass das Bremsenbauteil mit mehreren viskoelastischen Schichten ausgerüstet ist.

Die der Erfindung zu Grunde liegende Idee kann in vorteilhafter Weise auch bei der Herstellung von Bauteilen für Reibungskupplungen angewendet werden. Insoweit ist es erfindungsgemäß möglich, das Bremsenbauteil in - insbesondere hinsichtlich Dimension und Form - angepasster Form einer Kupplung einzusetzen.

Das erfindungsgemäße Bremsenbauteil kann vorteilhaft einen Reibbelag aufweisen und/oder als Reibbelag ausgebildet sein.

In erfindungsgemäßer Weise kann eine mit einem erfindungsgemäßen Bremsenbauteil versehene Bremsbacke derart aufgebaut sein, dass die Stabilisierungsschicht im wesentlichen zwischen dem Reibbelag und der viskoelastischen Schicht angeordnet ist und/oder das die Stabilisierungsschicht zumindest teilweise innerhalb des Reibbelags angeordnet ist.

Alternativ oder zusätzlich kann auch vorgesehen sein, dass die Stabilisierungsschicht zumindest teilweise in die - insbesondere der viskoelastischen Schicht zugewandten - Oberfläche des Reibbelages eingelassen ist. Bei den letztgenannten Ausführungsformen wird durch den Formschluss eine besonders gute Übertragung von Scherkräften von dem Reibbelag auf die Stabilisierungsschicht erreicht.

Bei einer ganz besonders vorteilhaften Ausführung ist die Stabilisierungsschicht vollständig innerhalb eines Reibbelages angeordnet. Hierbei entfaltet die Stabilisierungsschicht ihre stabilisierende Wirkung solange, bis der über der Stabilisierungsschicht befindliche Teil des Reibbelages verschlissen ist. Anschließend wird dann auch die Stabilisierungsschicht durch weiteren Verschleiß weggeschliffen. Vorzugsweise ist die Stabilisierungsschicht hierbei derart innerhalb des Reibbelages positioniert, dass die Stabilisierungsschicht erst dann weggeschliffen wird, wenn ihre vorteilhaften, insbesondere stabilisierenden, Wirkungen auf Grund der verringerten Dicke des Reibbelages, und damit insbesondere auf Grund dessen geänderten Schwingungsverhaltens, nicht mehr benötigt werden und/oder sich nur noch in geringem Maße auswirken.

Wie bereits ausgeführt, ist das erfindungsgemäße Bremsenbauteil vorzugsweise derart ausgebildet, dass die Stabilisierungsschicht selbst - vorzugsweise zumindest formschlüssig - derart an die viskoelastische Schicht angebunden ist, dass Scherkräfte von dort unmittelbar und ungehindert auf die viskoelastische Schicht übertragen werden. Insgesamt ergibt sich also dann eine besonders gute Übertragung von Scherkräften von einem Reibbelag über die Stabilisierungsschicht auf die viskoelastische Schicht, was im Ergebnis dazu führt, dass ein Großteil der Schwingungsenergie des Reibbelages in die viskoelastische Schicht transportiert und dort in Wärme umgewandelt wird. Das Ergebnis ist eine besonders gute Dämpfungswirkung.

Nach einem eigenständigen Erfindungsgedanken, der auch losgelöst von dem Merkmal, wonach zumindest eine Seite der viskoelastischen Schicht form-und/oder stoffschlüssig mit einer Stabilisierungsschicht verbunden ist, die die Seite der viskoelastischen Schicht unvollständig bedeckt, ist vorgesehen, dass die Stabilisierungsschicht aus demselben Material gefertigt ist, wie der Reibbelag. Eine stabilisierende Wirkung, insbesondere eine Zug- und/oder Druckfestigkeit kann hierbei beispielsweise dadurch erreicht werden, dass das Material der Stabilisierungsschicht höher verdichtet ist, als das Material des Reibbelages.

Insbesondere kann in vorteilhafter Weise vorgesehen sein, dass die Stabilisierungsschicht aus demselben Material gefertigt ist, wie der Reibbelag, wobei die Stabilisierungsschicht - insbesondere in der Stabilisierungsebene - eine höhere Zug- und/oder Druckfestigkeit aufweist, als der Reibbelag.

Bei einer Ausführungsform, bei der die Stabilisierungsschicht aus demselben Material gefertigt ist, wie der Reibbelag, besteht der ganz besondere Vorteil, dass die Verschleißgrenze bis auf den Übergangsbereich zwischen der Stabilisierungsschicht und dem Reibbelag ausgedehnt werden kann. Dies insbesondere deshalb, weil - anders als bei Reibbelägen, die beispielsweise direkt auf eine Stahlträgerplatte aufgebracht sind - eine Beschädigung, beispielsweise einer Bremsscheibe, durch das In-Kontakt-Treten mit der Stabilisierungsschicht wirkungsvoll vermieden ist, da die Stabilisierungsschicht letztlich keine andere Wirkung auf die Bremsscheibe hat, als der aus demselben Material gefertigte Reibbelag selbst.

In erfindungsgemäßer Weise wird die Stabilisierungsschicht vorzugsweise derart ausgebildet und ausgerichtet, das sie speziell in Bezug auf die bei der jeweiligen Anordnung entstehenden Schwingungen effizient eine Überleitung der Schwingungsenergie vom Reibbelag in die viskoelastische Schicht bewerkstelligt. In diesem Sinne ist bei einem erfindungsgemäßen Bremsenbauteil, insbesondere bei einer erfindungsgemäßen Bremsbacke, das dazu ausgebildet ist, reibend entlang einer Reibrichtung mit einem Gegenelement, wie beispielsweise einer Bremsscheibe, in Kontakt zu treten, vorgesehen, dass die Stabilisierungsschicht - beispielsweise als Streifen oder Streifenmuster - in Reibrichtung angeordnet ist.

In erfindungsgemäßer Weise kann auch vorgesehen sein, dass die Stabilisierungsschicht als Netz, insbesondere als Kevlarnetz, ausgebildet ist, wobei die Hauptfaserrichtung tangential zur Reibrichtung, insbesondere tangential zu einer Bremsscheibe, ausgerichtet ist. Die Hauptfasern eines solchen Kevlarnetzes können zusätzlich mit quer verlaufenden Verbindungsstegen verbunden sein.

Auch bei einer solchen Ausführung ist in erfindungsgemäß vorteilhafter Weise vorgesehen, dass die Stabilisierungsschicht in Bezug auf in der Stabilisierungsebene und in Reibrichtung auftretende Kräfte zug- und/oder druckfest ausgebildet ist.

Alle erfindungsgemäßen Ausführungsvarianten sind in der Weise umsetzbar, dass durch die vorgenannten und beschriebenen Arten der Veränderungen der Dämpfung keine Reduktion des Verschleißvolumens der Bremsbacke erfolgt.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: ein erfindungsgemäßes Bremsenbauteil,
- Fig. 2: eine schematische Querschnittsdarstellung eines erfindungsgemäßen Bremsenbauteils zur Veranschaulichung der Funktionsweise und
- Fig. 3: eine schematische Querschnittsdarstellung einer erfindungsgemäßen Bremsbacke.

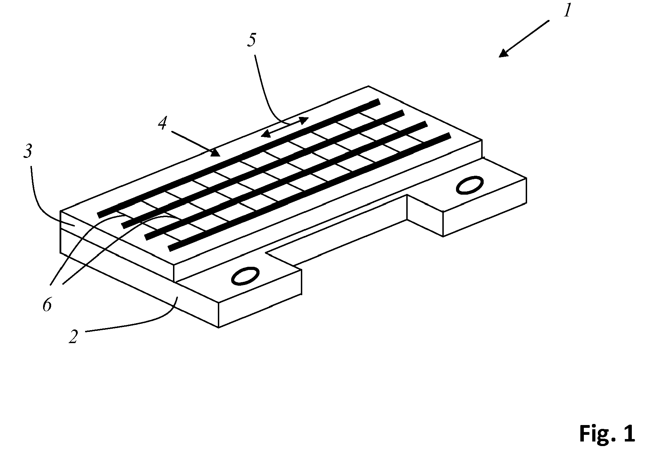

Figur 1 zeigt ein erfindungsgemäßes Bremsenbauteil 1. Das Bremsenbauteil 1 weist eine Grundträgerplatte 2 auf, die fest mit einer viskoelastischen Schicht 3 verbunden ist.

Die der Grundträgerplatte 2 abgewandte Seite der viskoelastischen Schicht 3 ist mit einer Stabilisierungsschicht 4 verbunden, die die der Grundträgerplatte 2 angewandte Seite der viskoelastischen Schicht 3 unvollständig bedeckt. Die Stabilisierungsschicht 4 ist in Form eines Gitters ausgebildet, wobei das Gitter eine Hauptfaserrichtung aufweist, die mit einem Doppelpfeil 5 markiert ist. Die Hauptfaserrichtung 5 entspricht im Wesentlichen der Tangentialrichtung in Bezug auf eine Bremsscheibe, mit der das gezeigte Bremsenbauteil 1 in Kontakt treten soll. Die Stabilisierungsschicht 4 ist in Hauptfaserrichtung 5 zug- und druckfest ausgebildet. Die in Hauptfaserrichtung 5 verlaufenden Fasern der Stabilisierungsschicht 4 sind mit Verbindungsstegen 6 miteinander verbunden.

Die Stabilisierungsschicht 4 ist zur Hälfte in der viskoelastischen Schicht 3 angeordnet und ragt zur Hälfte aus der viskoelastischen Schicht 3 heraus. Es ist vorgesehen, dass das Bremsenbauteil 1 mit einem einen - hier nicht dargestellten - Reibbelag derart versehen wird, dass die aus der viskoelastischen Schicht 3 herausragenden Teile der Stabilisierungsschicht 4 dann innerhalb des Reibbelages angeordnet sind.

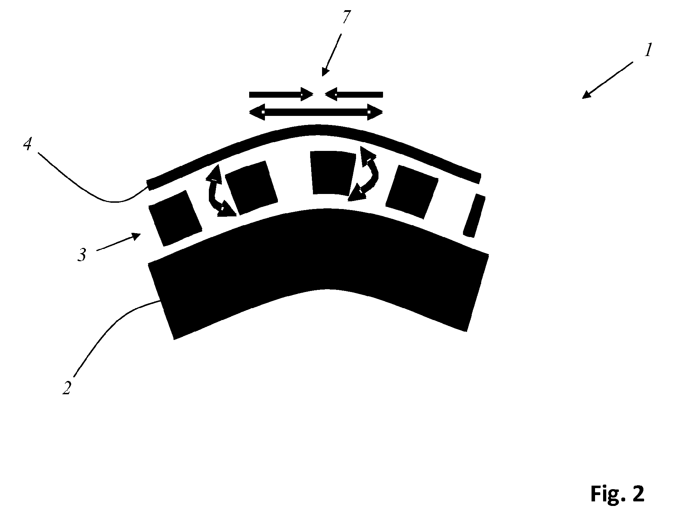

Figur 2 zeigt in einer schematischen Querschnittsdarstellung ein erfindungsgemäßes Bremsenbauteil 1 mit einer Grundplatte 2, einer viskoelastischen Schicht 3 und einer Stabilisierungsschicht 4. Es wird deutlich, dass die Biegesteifigkeit des Bremsenbauteils 1 umso größer ist, je zug- und/oder druckfester die Stabilisierungsschicht 4, insbesondere in Bezug auf in der Stabilisierungsebene auftretenden Zug- und Druckkräfte 7, ist.

Grob gesagt, ist das erfindungsgemäße Bremsenbauteil 1 hinsichtlich der Biegesteifigkeit ähnlich stabilisiert wie ein Doppel-T-Träger, wobei im übertragenen Sinne die Stabilisierungsschicht 4 und die Grundträgerplatte 2 die Flansche bilden und die viskoelastische Schicht 3 die Aufgabe des Stegs übernimmt.

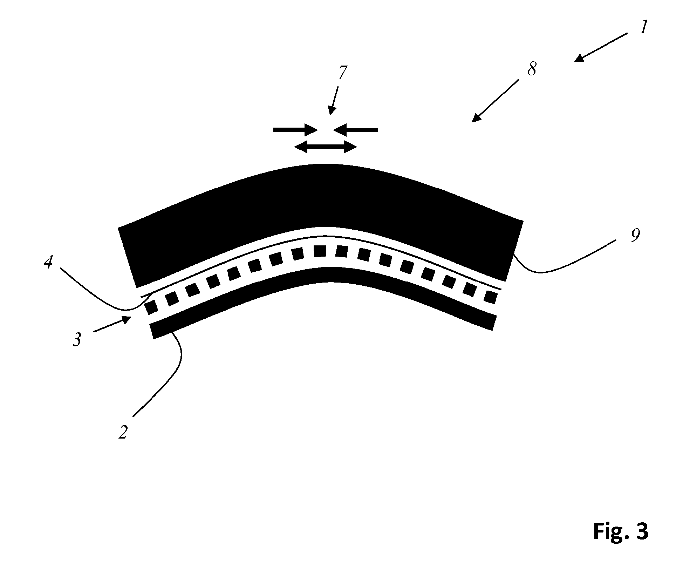

Figur 3 zeigt eine als Bremsbacke 8 ausgebildetes, erfindungsgemäßes Bremsenbauteil 1. Ein Reibbelag 9 ist derart fest angebunden, dass parallel zur Stabilisierungsebene, in der eine Stabilisierungsschicht 4 angeordnet ist, auftretende Kräfte weitgehend vollständig und unmittelbar von dem Reibbelag 9 auf eine viskoelastische Schicht 3 übertragen werden. Dies hat zur Folge, dass die im und am Reibbelag 9 - insbesondere an der Grenzfläche des Reibbelags 9 zu einer Bremsscheibe - erzeugte Schwingungsenergie mit großer Effizienz in die viskoselastische Schicht 3 übertragen und dort in Wärme umgesetzt wird. Im Ergebnis wird hierdurch eine gute Dämpfungswirkung erreicht.

Die Übertragung der Schwingungsenergie erfolgt erfindungsgemäß deshalb effizient, weil der Reibbelag 9 derart mit der Stabilisierungsschicht 4 verbunden ist, dass Scherkräfte 7 von einer auf die andere Schicht unmittelbar und weitgehend vollständig übertragen werden.

### Bezugszeichenliste

- 1: Bremsenbauteil
- 2: Grundträgerplatte
- 3: viskoelastische Schicht
- 4: Stabilisierungsschicht
- 5: Hauptfaserrichtung
- 6: Verbindungssteg
- 7: Zug- und Druckkraft
- 8: Bremsbacke
- 9: Reibbelag

## Patentansprüche

1. Bremsenbauteil (1), insbesondere Reibbelag und/oder Bremsbacke, für eine Bremse, das zumindest eine viskoelastische Schicht (3) aufweist, **dadurch gekennzeichnet, dass** zumindest eine Seite der viskoelastischen Schicht (3) form- und/oder stoffschlüssig mit einer Stabilisierungsschicht (4) verbunden ist, die die Seite der viskoelastischen Schicht (3) unvollständig bedeckt.

2. Bremsenbauteil (1) nach Anspruch 1, **dadurch gekennzeichnet, dass** die Stabilisierungsschicht (4) in Form einer Folie und/oder eines Gitters und/oder eines Netzes und/oder eines Streifens und/oder eines Streifenmusters ausgeführt ist.

3. Bremsenbauteil (1) nach einem der Ansprüche 1 oder 2, **dadurch gekennzeichnet, dass** die viskoelastische Schicht (3) als einstückiger Körper aus einem viskoelastischen Material ausgebildet ist und/oder dass die viskoelastische Schicht (3) als homogener, einstückiger Körper aus einem viskoelastischen Material ausgebildet ist und/oder dass die viskoelastische Schicht (3) als einstückige Platte aus einem viskoelastischen Material ausgebildet ist und/oder dass die viskoelastische Schicht (3) als einstückige, homogene Platte aus einem viskoelastischen Material ausgebildet ist.

4. Bremsenbauteil (1), nach einem der Ansprüche 1 bis 3, **dadurch gekennzeichnet, dass** die viskoelastische Schicht (3) auf der der Stabilisierungsschicht (4) abgewandten Seite mit einem Grundträger und/oder einer Grundträgerplatte (2) verbunden ist.

5. Bremsenbauteil (1), nach einem der Ansprüche 1 bis 4, **dadurch gekennzeichnet, dass** die Stabilisierungsschicht (4) weniger als 80%, insbesondere zwischen 20% und 80%, der Seite der viskoelastischen Schicht (3) bedeckt oder dass die Stabilisierungsschicht (4) weniger als 50%, insbesondere zwischen 20% und 50%, der Seite der viskoelastischen Schicht (3) bedeckt.

6. Bremsenbauteil (1), nach einem der Ansprüche 1 bis 5, **dadurch gekennzeichnet, dass** die Stabilisierungsschicht (4) in einer Stabilisierungsebene angeordnet ist und dass die Stabilisierungsschicht (4) in Bezug auf in der Stabilisierungsebene auftretende Kräfte zug- und/oder druckfest ausgebildet ist.

7. Bremsenbauteil (1), nach einem der Ansprüche 1 bis 6, **dadurch gekennzeichnet, dass** die Stabilisierungsschicht (4) ein Kevlarnetz und/oder zumindest einen Kevlarstreifen aufweist und/oder dass die Stabilisierungsschicht (4) ein Kunststoffgewebe aufweist und/oder dass die Stabilisierungsschicht (4) eine Metallfolie, insbesondere eine Aluminiumfolie aufweist und/oder dass die Stabilisierungsschicht (4) eine Dicke im Bereich 0,05 mm bis 2,0 mm, insbesondere von 0,1 mm, aufweist und/oder dass die Stabilisierungsschicht (4) dünner ist, als ein Viertel der Dicke des Grundträgers und/oder dass die Stabilisierungsschicht (4) dünner ist, als die Hälfte der Dicke der viskoelastischen Schicht (3).

8. Bremsenbauteil (1), nach einem der Ansprüche 1 bis 7, **dadurch gekennzeichnet, dass** die Stabilisierungsschicht (4) zumindest teilweise innerhalb der viskoelastischen Schicht (3) angeordnet ist und/oder dass die Stabilisierungsschicht (4) zumindest teilweise in die Oberfläche der Seite der viskoelastischen Schicht (3) eingelassen ist.

9. Bremsenbauteil (1), nach einem der Ansprüche 1 bis 9, **dadurch gekennzeichnet, dass** das Bremsenbauteil ausschließlich eine einzige viskoelastischen Schicht (3) aufweist.

10. Bremsenbauteil (1), nach einem der Ansprüche 1 bis 9, **dadurch gekennzeichnet, dass** das Bremsenbauteil einen Reibbelag (9) aufweist und/oder als Reibbelag (9) ausgebildet ist.

11. Bremsenbauteil (1), nach Anspruch 10, **dadurch gekennzeichnet, dass**
a. die Stabilisierungsschicht (4) vollständig innerhalb eines Reibbelages (9) angeordnet ist und/oder dass
b. die Stabilisierungsschicht (4) vollständig innerhalb eines Reibbelages (9) angeordnet und derart positioniert ist, dass sie durch Verschleiß des Reibbelages (9) dann entfernt wird, wenn ihre vorteilhaften, insbesondere stabilisierenden, Wirkungen auf Grund der verringerten Dicke des Reibbelages (9) nicht mehr benötigt werden.

12. Bremsenbauteil (1) nach Anspruch 10, **dadurch gekennzeichnet, dass** die Stabilisierungsschicht (4) im Wesentlichen zwischen einem Reibbelag (9) und der viskoelastischen Schicht (3) angeordnet ist und/oder dass die Stabilisierungsschicht (4) zumindest teilweise innerhalb eines Reibbelags (9) angeordnet ist und/oder dass die Stabilisierungsschicht (4) zumindest teilweise in die Oberfläche eines Reibbelags (9) eingelassen ist.

13. Bremsenbauteil (1) nach Anspruch 10, **dadurch gekennzeichnet, dass** die Stabilisierungsschicht (4) aus demselben Material gefertigt ist, wie der Reibbelag (9), wobei das Material der Stabilisierungsschicht (4) jedoch höher verdichtet ist, als das Material des Reibbelages (9) und/oder dass die Stabilisierungsschicht (4) aus demselben Material gefertigt ist, wie der Reibbelag, wobei die Stabilisierungsschicht (4) eine höhere Zug- und/oder Druckfestigkeit aufweist, als der Reibbelag (9).

14. Bremsenbauteil (1) nach einem der Ansprüche 1 bis 13, **dadurch gekennzeichnet, dass** das Bremsenbauteil (1) dazu ausgebildet ist reibend entlang einer Reibrichtung mit einem Gegenelement, wie beispielsweise einer Bremsscheibe, in Kontakt zu treten und dass die Stabilisierungsschicht (4) in Reibrichtung angeordnet ist und/oder dass die Stabilisierungsschicht (4) in Bezug auf in der Stabilisierungsebene und in Reibrichtung auftretende Kräfte zug- und/oder druckfest ausgebildet ist und/oder dass die Stabilisierungsschicht (4) in Bezug auf in der Stabilisierungsebene und ausschließlich in Reibrichtung auftretende Kräfte zug- und/oder druckfest ausgebildet ist.

15. Bremsenbauteil (1) nach einem der Ansprüche 1 bis 14, **dadurch gekennzeichnet, dass** die viskoelastische Schicht (3) derart mit der Stabilisierungsschicht (4) verbunden ist, dass Scherkräfte von einer auf die andere Schicht unmittelbar und/oder weitgehend vollständig übertragen werden und/oder dass der Reibbelag (9) derart mit der Stabilisierungsschicht (4) verbunden ist, dass Scherkräfte von einer auf die andere Schicht unmittelbar und/oder weitgehend vollständig übertragen werden.

16. Bremse mit einem Bremsenbauteil (1) nach einem der Ansprüche 1 bis 15.
